# EUROPÄISCHE PATENTSCHRIFT

(11) **EP 3 214 326 B1**
(45) Veröffentlichungstag und Bekanntmachung des Hinweises auf die Patenterteilung: **15.08.2018**
(21) Anmeldenummer: 16158165.7
(22) Anmeldetag: 02.03.2016
(51) Int. Cl.: F16C 29/02, F16C 29/12

(54) **LINEARES GLEITLAGER MIT KLEINEM WINKELFEHLER**
LINEAR SLIDING BEARING WITH SMALL ANGLE ERROR
PALIER LISSE LINEAIRE PRESENTANT UNE FAIBLE ERREUR ANGULAIRE

(43) Veröffentlichungstag der Anmeldung: 06.09.2017
(73) Patentinhaber: ETEL S.A., 2112 Môtiers (CH)
(72) Erfinder: Da Conceição Rosa, André-Rafael, 2300 La Chaux-de-Fonds (CH); Hulmann, Christophe, 25300 Pontarlier (FR)
(74) Vertreter: Pleyer, Hans Anno

(56) Entgegenhaltungen:
- EP-B1- 0 816 013
- WO-A1-95/21336
- JP-A- 2001 227 536

## Beschreibung

### GEBIET DER TECHNIK

Die vorliegende Erfindung betrifft ein lineares Gleitlager mit einem besonders kleinen Winkelfehler. Solche Gleitlager dienen dazu, ein Maschinenteil in einer linearen Richtung zu bewegen, ohne dabei zusätzliche Bewegungen auszuführen, die die Positionierung des Maschinenteils in unerwünschter Weise verändern würden.

### STAND DER TECHNIK

In der Halbleiterfertigung besteht an verschiedenen Anlagen und Messinstrumenten die Anforderung, einen Wafer längs einer vertikalen Z-Richtung zu bewegen, ohne ihn während dieser Bewegung um die Z-Achse zu verdrehen. Diese Drehrichtung sei hier als rZ bezeichnet. So kann in einem Inspektionsgerät zur Qualitätskontrolle ein Wafer vorjustiert auf einem Tisch abgelegt werden, der dann in seiner Höhe verstellt wird, um in den Schärfebereich eines Mikroskops zu gelangen. Um die interessierenden Bereiche des Wafers untersuchen zu können, muss die Ausrichtung des Wafers bis auf die Z-Richtung erhalten bleiben. Eine Rotation in rZ wäre dabei besonders nachteilig, weil sie sich in Randbereichen des Wafers, also weit vom Drehzentrum entfernt, durch eine große Verschiebung der aufgesuchten Position in der Ebene des Wafers bemerkbar machen würde. Wünschenswert ist daher eine Z-Achse, deren Winkelfehler möglichst klein ist.

Aus der EP 0816013 B1, dass die Merkmale des Oberbegriffs von Anspruch 1 offenbart, ist eine spielfrei einstellbare Geradführung bekannt.

Zwischen einer Führungswelle und einer Lagerbuchse sorgt hier ein jeweils keilförmiges Profil dafür, dass das Spiel der Führungswelle und der Lagerbuchse durch Verdrehen der Lagerbuchse relativ zur Führungswelle einstellbar ist. Die Lagerbuchse wird am Gleitstück mittels Langlöchern befestigt, so dass das Spiel neu eingestellt werden kann, wenn die Lagerbuchse ihre Form durch Verschleiß geändert hat. Durch das Vorsehen von drei Keilen auf dem Umfang von Lagerbuchse bzw. Führungswelle bleiben die beiden Elemente zueinander zentriert. Es wird auch vorgeschlagen, die Lagerbuchse mittels einer Feder tangential vorzuspannen, so dass bei Verschleiß oder auch bei thermischen Ausdehnungen jederzeit ein spielfreies und dennoch leichtes Gleiten möglich ist. Allerdings ermöglicht diese Geradführung weiterhin eine gewisse Drehung des Gleitstücks relativ zur Führungswelle, denn die Keilprofile sind alle in die gleiche Richtung orientiert und weisen nur eine sehr geringe Steigung auf. Daher kann sich die Lagerbuchse bzw. das Gleitstück um die Führungswelle drehen, wobei dies in einer der beiden Drehrichtungen besonders leicht möglich ist, weil sich hier die Keile voneinander lösen und so das Spiel der Geradführung vergrößert wird. Um hier ein bewegliches Teil linear zu bewegen und dessen Rotation um die lineare Richtung zu blockieren, sind mindestens zwei solcher Geradführungen notwendig.

### ZUSAMMENFASSUNG DER ERFINDUNG

Es ist daher Aufgabe der Erfindung, ein lineares Gleitlager zu schaffen, bei dem die Rotation des Gleitstücks um die Führungswelle zuverlässig und in beiden Drehrichtungen unterbunden ist, und das dennoch ein leichtes, spielfreies Gleiten des Gleitstücks ermöglicht.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein lineares Gleitlager mit einer Führungswelle offenbart, auf der ein Gleitstück in einer Führungsrichtung beweglich geführt ist, mit zwischen der Führungswelle und dem Gleitstück eingesetzten Buchsen. Eine dieser Buchsen ist als Hauptbuchse fest mit dem Gleitstück verbunden, die andere ist als Vorspannbuchse gegenüber dem Gleitstück um die Führungsrichtung drehbar gehalten und dabei mittels eines Drehmoments vorgespannt. Drehungen um die Führungsrichtung zwischen dem Gleitstück und der Führungswelle sind durch einen jeweiligen Kontaktbereich zwischen den Buchsen einerseits und der Führungswelle andererseits in beiden Drehrichtungen blockiert, wobei die Hauptbuchse und die Vorspannbuchse durch das Drehmoment in entgegengesetzte Drehrichtungen gegenüber der Führungswelle spielfrei vorgespannt sind.

Durch die gegensinnige Vorspannung der beiden Buchsen des Gleitlagers werden Drehungen des Gleitstücks um die Führungswelle in beiden Drehrichtungen zuverlässig vermieden. Auch wenn sich die Kontaktbereiche über einen längeren Zeitraum abnutzen, hält die Feder die spielfreie Vorspannung aufrecht, so dass auch nach einiger Zeit eine Positionierung eines Wafers ohne Veränderung seiner Ausrichtung bezüglich einer Drehung um die Führungsrichtung ermöglicht wird.

Die Hauptbuchse ist fest mit dem Gleitstück verbunden und übernimmt vor allem die Aufgabe der Zentrierung von Gleitstück und Führungswelle. Sie verhindert auch ein gegenseitiges Verkippen zwischen dem Gleitstück und der Führungswelle. Im Gegensatz dazu kann sich die Vorspannbuchse im Gleitstück in gewissen Grenzen frei bewegen. Sie ist über eine Feder mit dem Gleitstück verbunden, die als Torsionsfeder das Drehmoment zur spielfreien Vorspannung aufbringt.

Weitere Details der Erfindung ergeben sich aus der Beschreibung von Ausführungsbeispielen anhand der Figuren.

### KURZE BESCHREIBUNG DER ZEICHNUNGEN

Dabei zeigen die
- Figur 1: ein erfindungsgemäßes Gleitlager als erstes Ausführungsbeispiel in einer Explosionsdarstellung,
- Figuren 2 - 7: verschiedene Ansichten und Schnitte des ersten Ausführungsbeispiels,
- Figuren 8 - 9: einen Schritt bei der Montage des Gleitlagers, und die
- Figur 10: ein Gleitlager mit einem integrierten Elektromotor als zweites Ausführungsbeispiel.

### BESCHREIBUNG DER AUSFÜHRUNGSFORMEN

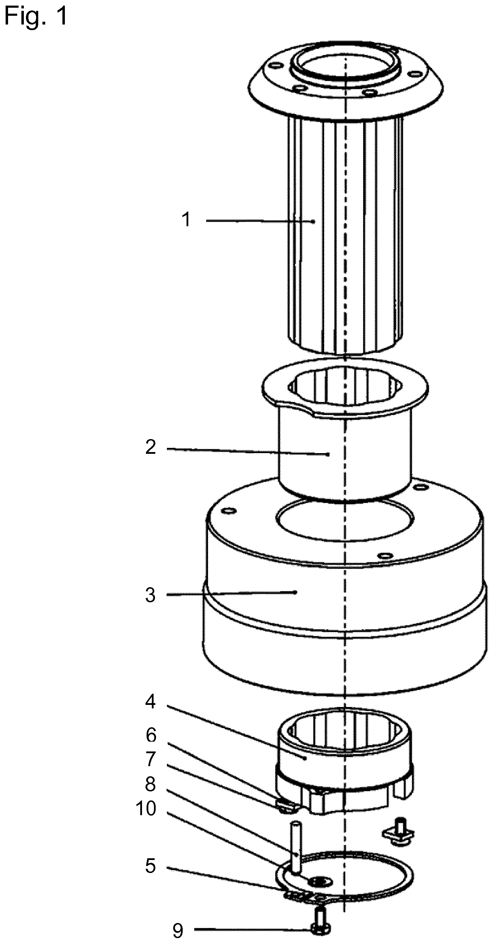

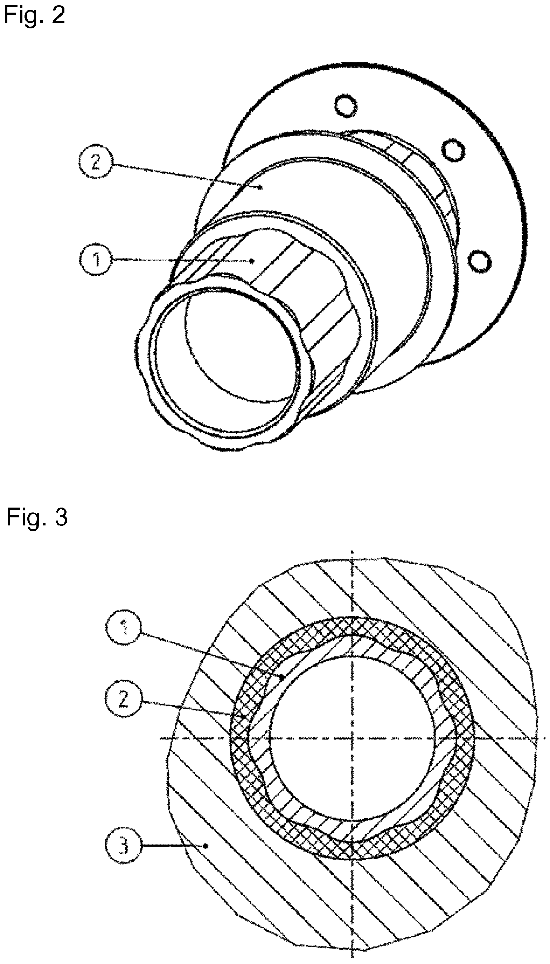

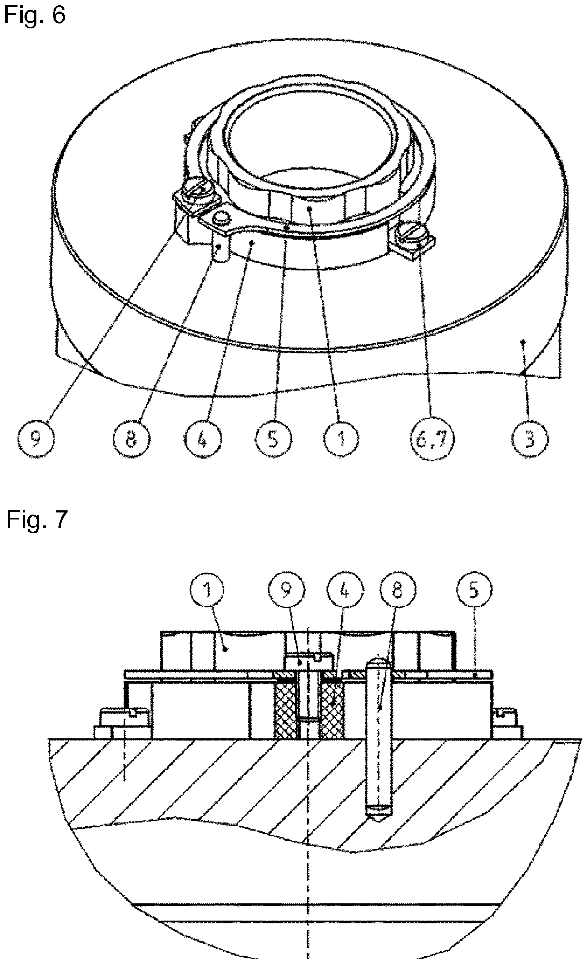

Der Aufbau eines erfindungsgemäßen linearen Gleitlagers lässt sich gut anhand der Zusammenschau der Figuren 1 - 7 erkennen, die im Folgenden gemeinsam beschrieben werden.

Auf einer Führungswelle 1 ist ein Gleitstück 3 in der Führungsrichtung beweglich gehalten. Zwischen dem Gleitstück 3 und der Führungswelle 1 sind zwei Buchsen 2, 4 angeordnet. Die Hauptbuchse 2 ist dabei fest mit dem Gleitstück 3 verbunden, beispielsweise durch Kleben. Die Vorspannbuchse 4 sitzt dagegen mit etwas radialem Spiel innerhalb des Gleitstücks 3, der äußere Radius der Vorspannbuchse 4 ist also etwas kleiner als der innere Radius der Öffnung im Gleitstück 3.

Die Führungswelle 1 ist aus anodisiertem Aluminium gefertigt, die Dicke der Oxidschicht beträgt ca. 35 - 40 µm. Für die Buchsen 2, 4 eignet sich ein speziell für Gleitlager entwickelter Kunststoff-Verbund, in dem neben dem Basispolymer auch eingebettete Fasern oder Füllstoffe zur Verstärkung sowie Schmierstoffe zur Verminderung der Reibung eingebettet sind.

Um die Vorspannbuchse 4 im Gleitstück zu halten, ragen Blockier-Einrichtungen 6 in seitliche Aussparungen der Vorspannbuchse 4. Die Blockier-Einrichtungen 6 sind mittels Schrauben 7 am Gleitstück 3 befestigt. Die Blockier-Einrichtungen 6 verhindern ein axiales Herausrutschen, lassen dabei aber eine gewisse Drehung der Vorspannbuchse 4 innerhalb des Gleitstücks 3 zu, denn die Ausnehmungen sind in Umfangsrichtung breiter als die Blockier-Einrichtungen 6.

Die Innenflächen der Buchsen 2, 4 und die Außenfläche der Führungswelle 1 bilden Kontaktbereiche, an denen das Gleitstück 3 entlang der Führungswelle 1 gleitet. Um eine Verdrehung des Gleitstücks 3 gegenüber der Führungswelle 1 zu vermeiden, weisen diese eine Drehung um die Führungsrichtung blockierende, ineinander greifende, in sich symmetrische Maxima und Minima auf. Da solche Kontaktbereiche aufgrund von Fertigungstoleranzen und Abnützung immer mit einem gewissen Spiel behaftet sind, werden die Hauptbuchse 2 und die Vorspannbuchse 4 durch ein Drehmoment in entgegengesetzten Drehrichtungen gegenüber der Führungswelle 1 vorgespannt. Dadurch wird das Spiel zwischen den Buchsen 2, 4 und der Führungswelle 1 aufgehoben, bei einer Verschiebung des Gleitstücks 3 wird dessen Winkellage relativ zur Führungswelle 1 beibehalten.

Die Kontaktbereiche sind wellenförmig ausgebildet, wobei sich jeweils acht Erhebungen und acht Vertiefungen auf einem Umfang als guter Kompromiss zwischen einfacher Herstellbarkeit und wirksamer Unterdrückung des Spiels bewährt haben.

Das zur Vorspannung benötigte Drehmoment wird von einer Feder 5 aufgebracht, die als Torsionsfeder ausgebildet ist. Das eine Ende dieser Torsionsfeder 5 ist mittels einer axialen Schraube 9 und einer Beilagscheibe 10 an der Vorspannbuchse 4 befestigt, das andere Ende der Torsionsfeder 5 ist mittels eines axialen Stiftes 8 mit dem Gleitstück 3 verbunden. Im montierten Zustand ist diese Torsionsfeder 5 gespannt, so dass zwischen dem Gleitstück 3 und der Vorspannbuchse 4 ein Drehmoment wirkt.

Da das Gleitstück 3 fest mit der Hauptbuchse 2 verbunden ist, wirkt das Drehmoment letztlich zwischen der Hauptbuchse 2 und der Vorspannbuchse 4. Das Drehmoment wird daher von den ineinandergreifenden Maxima und Minima der Kontaktflächen aufgenommen. Die Maxima und Minima werden somit in tangentialer Richtung aneinander gedrängt, jedoch in der Hauptbuchse 2 und der Vorspannbuchse 4 mit entgegengesetztem Drehsinn. Damit ist das lineare Gleitlager in beiden Drehrichtungen vorgespannt. Die Blockier-Einrichtungen 6 und die seitlichen Ausnehmungen in der Vorspannbuchse 4, die diese Blockier-Einrichtungen 6 aufnehmen, müssen also so dimensioniert sein, dass sie genügend Spiel geben, um die spielfreie Vorspannung zwischen den Buchsen 2, 4 und der Führungswelle 1 zu ermöglichen, auch nach einer gewissen Abnutzung der Kontaktbereiche.

Ebenso muss die Feder 5 eine ausreichende Härte und Vorspannung aufweisen, um das unerwünschte Spiel auch nach einer gewissen Abnutzung der Kontaktbereiche zu verhindern.

Über einen längeren Zeitraum kann sich zwar das Gleitstück 3 wegen der Abnutzung der Kontaktbereiche leicht gegenüber der Führungswelle 1 verdrehen, während einem einzelnen Bewegungszyklus ist dieser Effekt aber völlig zu vernachlässigen, die Winkellage ist hier stabil. Ein vorjustiertes Werkstück wie beispielsweise ein Wafer wird seine Ausrichtung behalten.

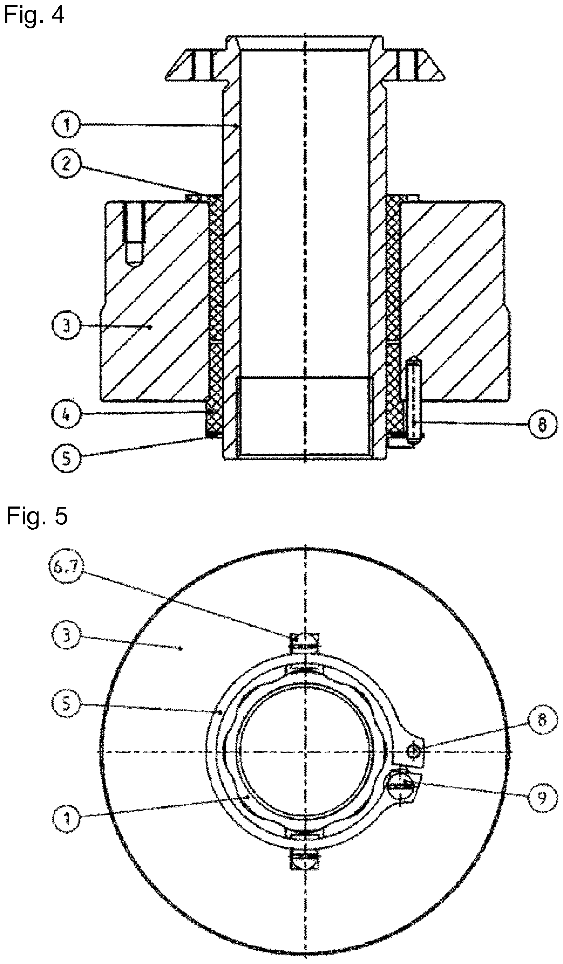

Vor allem in der Figur 4 ist gut zu erkennen, dass die Hauptbuchse 2 in Führungsrichtung deutlich länger ausgebildet ist als die Vorspannbuchse 4. Dies ist der oben bereits erwähnten Tatsache geschuldet, dass die Hauptbuchse 2 vorwiegend die Aufgabe der Führung des Gleitstücks 3 übernimmt, während die Vorspannbuchse 4 vor allem der Erzeugung des benötigten Drehmomentes dient.

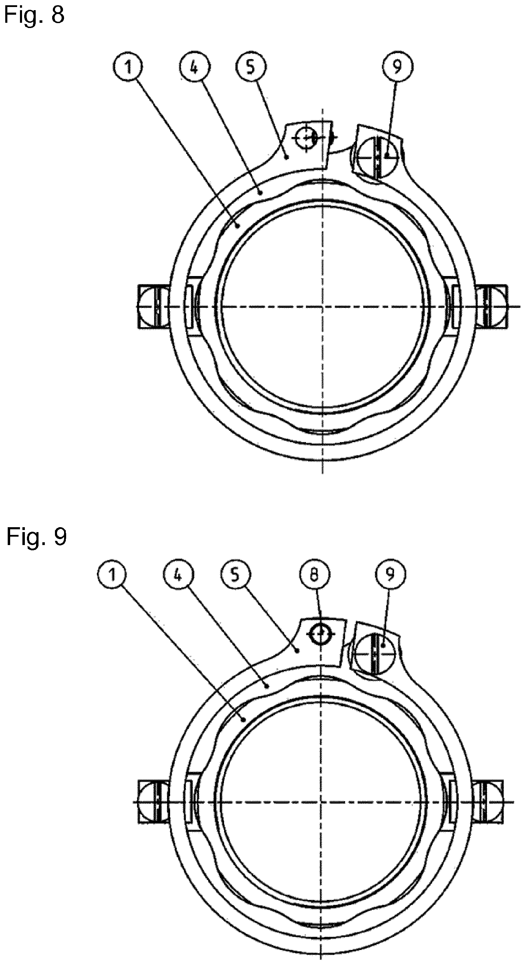

Die Figuren 8 und 9 zeigen einen Montageschritt der Torsionsfeder 5. Während in der Figur 8 die Torsionsfeder 5 lediglich mittels der Schraube 9 an der Vorspannbuchse 4 befestigt und noch entspannt ist, wurde die Torsionsfeder 5 in der Figur 9 durch Zusammendrücken gespannt und mittels des Stiftes 8 in tangentialer Richtung gesichert. Die Schraube 9 und der Stift 8 können natürlich auch jeweils am anderen Ende der Feder 5 angeordnet werden.

Die Führungswelle 1 ist außerdem als Hohlwelle ausgebildet. Damit ist es möglich, Versorgungsleitungen durch die Führungswelle 1 zu legen. So kann es nötig sein, eine Vakuumleitung an das obere Ende der Führungswelle 1 zu legen, um dort einen Wafer mittels Unterdruck zu halten, oder auch um die Aktorik und Sensorik einer zusätzlichen Feinpositionierung zu betreiben.

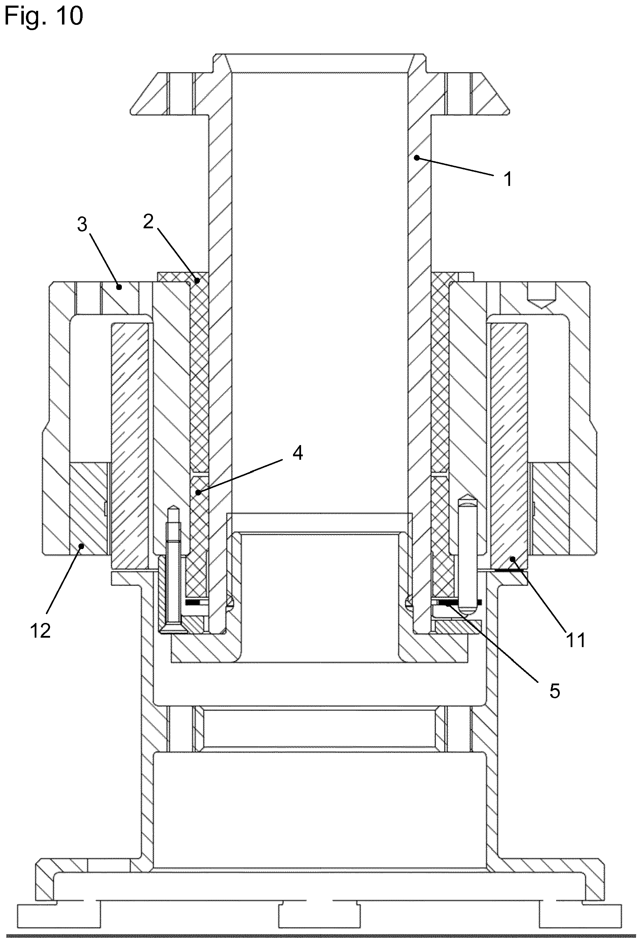

Die Figur 10 zeigt schließlich ein weiteres Ausführungsbeispiel für ein lineares Gleitlager. Dieses ist weitestgehend gleich aufgebaut wie das erste Ausführungsbeispiel. Dieses Gleitlager weist allerdings einen zusätzlichen Elektromotor auf, mit dem das Gleitstück 3 entlang der Führungswelle 1 bewegt werden kann. Hierzu weist das Gleitstück 3 ein ringförmig umlaufendes U-Profil auf, wobei im Inneren dieses U-Profils radial magnetisierte Magnete 12 angebracht sind. Diese wirken mit einer ortsfesten, ringförmig angeordneten Zylinderspule 11 zusammen, die in das Innere des U-Profils ragt. Die Magnete 12 und die Spule 11 bilden einen einphasigen Elektromotor.

Durch eine geeignete Bestromung der Spule 11 lässt sich so das Gleitstück 3 verschieben. Die Anordnung der Magnete 12 und Spulen 11 kann natürlich vertauscht werden, allerdings mit dem Nachteil, dass dann bewegliche Zuleitungen zur Spule 11 benötigt werden.

## Patentansprüche

1. Lineares Gleitlager mit einer Führungswelle (1), auf der ein Gleitstück (3) in einer Führungsrichtung beweglich geführt ist, mit zwischen der Führungswelle (1) und dem Gleitstück (3) eingesetzten Buchsen (2, 4), wobei eine Hauptbuchse (2) fest mit dem Gleitstück (3) verbunden ist und eine Vorspannbuchse (4) gegenüber dem Gleitstück (3) um die Führungsrichtung drehbar gehalten und dabei mittels eines Drehmoments vorgespannt ist, **dadurch gekennzeichnet, dass** Drehungen um die Führungsrichtung zwischen dem Gleitstück (3) und der Führungswelle (1) durch einen jeweiligen Kontaktbereich zwischen den Buchsen (2, 4) einerseits und der Führungswelle (1) andererseits in beiden Drehrichtungen blockiert sind, wobei die Hauptbuchse (2) und die Vorspannbuchse (4) durch das Drehmoment in entgegengesetzte Drehrichtungen gegenüber der Führungswelle (1) spielfrei vorgespannt sind.

2. Vorrichtung nach Anspruch 1, **dadurch gekennzeichnet, dass** die Kontaktbereiche zwischen den Buchsen (2, 4) einerseits und der Führungswelle (1) andererseits ineinandergreifende, in sich symmetrische Maxima und Minima aufweisen.

3. Vorrichtung nach Anspruch 1 oder 2, **dadurch gekennzeichnet, dass** die Kontaktbereiche wellenförmig ausgebildet sind.

4. Vorrichtung nach Anspruch 2 oder 3, **dadurch gekennzeichnet, dass** auf einem Umfang der Kontaktbereiche acht Maxima und acht Minima angeordnet sind.

5. Vorrichtung nach einem der vorhergehenden Ansprüche, **dadurch gekennzeichnet, dass** das Drehmoment von einer Feder (5) erzeugt ist, die zwischen der Vorspannbuchse (4) und dem Gleitstück (3) angeordnet ist.

6. Vorrichtung nach Anspruch 5, **dadurch gekennzeichnet, dass** die Feder (5) als Torsionsfeder ausgebildet ist, deren Enden mit der Vorspannbuchse (4) bzw. dem Gleitstück (3) verbunden sind.

7. Vorrichtung nach Anspruch 6, **dadurch gekennzeichnet, dass** die Feder (5) an ihrem einen Ende mittels einer Schraube (9) und an ihrem anderen Ende mittels eines Stiftes (8) befestigt ist, der bei gespannter Feder (5) durch eine Öffnung in der Feder (5) in eine Bohrung im Gleitstück (3) oder in der Vorspannbuchse (4) ragt.

8. Vorrichtung nach einem der vorhergehenden Ansprüche, **dadurch gekennzeichnet, dass** die Vorspannbuchse (4) seitliche Aussparungen aufweist, in die Blockier-Einrichtungen (6) ragen, die fest mit dem Gleitstück (3) verbunden sind, wobei die Aussparungen so dimensioniert sind, dass sich die Vorspannbuchse (4) und das Gleitstück (3) zumindest so weit gegeneinander verdrehen lassen, dass die spielfreie Vorspannung der Buchsen (2, 4) gegenüber der Führungswelle (1) erreicht wird.

9. Vorrichtung nach Anspruch 8, **dadurch gekennzeichnet, dass** der äußere Durchmesser der Vorspannbuchse (4) kleiner ist als der innere Durchmesser des Gleitstücks (1), so dass sich die Vorspannbuchse (4) im Gleitstück (1) frei drehen kann, soweit die Blockier-Einrichtung (6) dies zulässt.

10. Vorrichtung nach Anspruch 8 oder 9, **dadurch gekennzeichnet, dass** die Blockier-Einrichtung (6) ein Herausrutschen der Vorspannbuchse (4) aus dem Gleitstück (3) in der Führungsrichtung verhindert.

11. Vorrichtung nach einem der vorhergehenden Ansprüche, **dadurch gekennzeichnet, dass** die Führungswelle (1) als Hohlwelle ausgebildet ist.

12. Vorrichtung nach einem der vorhergehenden Ansprüche, **dadurch gekennzeichnet, dass** das Gleitstück (3) Magnete (12) oder Spulen (11) trägt, die einen Teil eines Elektromotors bilden, mit dem das Gleitstück (3) längs der Führungswelle (1) verstellbar ist.

13. Vorrichtung nach Anspruch 12, **dadurch gekennzeichnet, dass** das Gleitstück (3) ein ringförmig umlaufendes U-Profil aufweist, wobei die Magnete (12) des Elektromotors im Inneren des U-Profils befestigt sind, und wobei außerdem eine ortsfeste, ringförmige Zylinderspule (11) des Elektromotors in das U-Profil ragt.

14. Vorrichtung nach Anspruch 13, **dadurch gekennzeichnet, dass** die Magnete (12) und die Zylinderspule (11) einen einphasigen Elektromotor bilden.

## Claims

1. Linear sliding bearing with a guide shaft (1), on which a sliding block (3) is guided in a guiding direction in a moveable manner, with bushings (2, 4) inserted between the guide shaft (1) and the sliding block (3), wherein a main bushing (2) is permanently connected to the sliding block (3) and a biasing bushing (4) is kept against the sliding block capable of rotating around the guiding direction with relation to the sliding block (3) and is thereby pretensioned with a torque, **characterized in that** rotations around the guiding direction between the sliding block (3) and the guide shaft (1) are blocked in both directions by a respective contact area between the bushings (2, 4) on the one hand and the guide shaft (1) on the other, wherein the main bushing (2) and the biasing bushing (4) are pretensioned by the torque in the opposing rotational directions against the guide shaft (1) without any play.

2. Apparatus according to Claim 1, **characterized in that** the contact areas have symmetric maxima and minima engaging into each other between the bushings (2, 4) on the one hand and the guide shaft (1) on the other.

3. Apparatus according to Claim 1 or 2, **characterized in that** the contact areas are wave-shaped.

4. Apparatus according to Claim 2 or 3, **characterized in that** the contact areas, eight maxima and eight minima arc arranged across and extent of the contact areas.

5. Apparatus according to any one of the preceding claims, **characterized in that** the torque generated by a spring (5) is arranged between the biasing bushing (4) and the sliding block (3).

6. Apparatus according to Claim 5, **characterized in that** the spring (5) is designed as a torsion spring, the ends of which are connected to the biasing bushing (4) and the sliding block (3).

7. Apparatus according to Claim 6, **characterized in that** the spring (5) is attached at one of its ends by means of a screw (9) and is attached on its other end by means of a pin (8), which projects through an opening in the spring (5) into a bore hole in the sliding block (3) or in the biasing bushing (4) when the spring (5) is tensioned.

8. Apparatus according to any one of the preceding claims, **characterized in that** the biasing bushing (4) has lateral recesses, into which blocking devices (6) project, which are permanently connected to the sliding block (3), wherein the recesses are dimensioned in such a way that the biasing bushing (4) and the sliding block (3) can be rotated against each other to such an extent that the play-free pretensioning of the bushings (2, 4) against the guide shaft (1) is achieved.

9. Apparatus according to Claim 8, **characterized in that** the outer diameter of the biasing bushing (4) is smaller than the inner diameter of the sliding block (1) so that the biasing bushing (4) can freely rotate within the sliding block (1) to the extent the blocking device (6) allows this.

10. Apparatus according to Claim 8 or 9, **characterized in that** the blocking device (6) prevents the biasing bushing (4) from slipping out of the sliding block (3) in the guiding direction.

11. Apparatus according to any one of the preceding claims, **characterized in that** the guide shaft (1) is designed as a hollow shaft.

12. Apparatus according to any one of the preceding claims, **characterized in that** the sliding block (3) carries magnets (12) or coils (11), which form a part of an electric motor, by means of which the sliding block (3) can be adjusted along the guide shaft (1).

13. Apparatus according to Claim 12, **characterized in that** the sliding block (3) has a ring-shaped circumferential U-profile, wherein the magnets (12) of the electric motor arc attached in the interior space of the U-profile and wherein, furthermore, a stationary ring-shaped cylinder coil (11) of the electric motor projects into the U-profile.

14. Apparatus according to Claim 13, **characterized in that** the magnets (12) and the cylinder coil (11) form a single-phase electric motor.

## Revendications

1. Palier lisse linéaire avec un arbre de guidage (1), sur lequel un coulisseau (3) est guidé de façon mobile dans une direction de guidage, avec des douilles (2, 4) insérées entre l'arbre de guidage (1) et le coulisseau (3), dans lequel une douille principale (2) est solidaire du coulisseau (3) et une douille précontrainte (4) est maintenue de façon rotative par rapport au coulisseau (3) autour de la direction de guidage et est en l'occurrence précontrainte au moyen d'un couple, **caractérisé en ce que** des rotations autour de la direction de guidage entre le coulisseau (3) et l'arbre de guidage (1) sont bloquées dans les deux sens de rotation par une région de contact respective entre les douilles (2, 4) d'une part et l'arbre de guidage (1) d'autre part, dans lequel la douille principale (2) et la douille précontrainte (4) sont précontraintes sans jeu par le couple dans des sens de rotation opposés par rapport à l'arbre de guidage (1).

2. Dispositif selon la revendication 1, **caractérisé en ce que** les régions de contact entre les douilles (2, 4) d'une part et l'arbre de guidage (1) d'autre part présentent des maxima et des minima symétriques qui s'engagent l'un dans l'autre.

3. Dispositif selon la revendication 1 ou 2, **caractérisé en ce que** les régions de contact sont réalisées en forme d'ondes.

4. Dispositif selon la revendication 2 ou 3, **caractérisé en ce que** huit maxima et huit minima sont disposés sur un pourtour des régions de contact.

5. Dispositif selon l'une quelconque des revendications précédentes, **caractérisé en ce que** le couple est produit par un ressort (5), qui est disposé entre la douille précontrainte (4) et le coulisseau (3).

6. Dispositif selon la revendication 5, **caractérisé en ce que** le ressort (5) est constitué sous forme de ressort de torsion, dont les extrémités sont attachées à la douille précontrainte (4) ou au coulisseau (3).

7. Dispositif selon la revendication 6, **caractérisé en ce que** le ressort (5) est fixé à sa première extrémité au moyen d'une vis (9) et à son autre extrémité au moyen d'une broche (8), qui lorsque le ressort (5) est tendu pénètre à travers une ouverture dans le ressort (5) dans un perçage dans le coulisseau (3) ou dans la douille précontrainte (4).

8. Dispositif selon l'une quelconque des revendications précédentes, **caractérisé en ce que** la douille précontrainte (4) présente des découpes latérales, dans lesquelles s'engagent des dispositifs de blocage (6), qui sont solidaires du coulisseau (3), dans lequel les découpes sont dimensionnées de telle manière que la douille précontrainte (4) et le coulisseau (3) puissent tourner l'un par rapport à l'autre au moins à un point tel que la précontrainte sans jeu des douilles (2, 4) par rapport à l'arbre de guidage (1) soit atteinte.

9. Dispositif selon la revendication 8, **caractérisé en ce que** le diamètre extérieur de la douille précontrainte (4) est plus petit que le diamètre intérieur du coulisseau (1), de telle manière que la douille précontrainte (4) puisse tourner librement dans le coulisseau (1), dans la mesure où le dispositif de blocage (6) le permet.

10. Dispositif selon la revendication 8 ou 9, **caractérisé en ce que** le dispositif de blocage (6) empêche une expulsion de la douille précontrainte (4) hors du coulisseau (3) dans la direction de guidage.

11. Dispositif selon l'une quelconque des revendications précédentes, **caractérisé en ce que** l'arbre de guidage (1) est constitué sous forme d'arbre creux.

12. Dispositif selon l'une quelconque des revendications précédentes, **caractérisé en ce que** le coulisseau (3) porte des aimants (12) ou des bobines (11), qui forment une partie d'un moteur électrique, avec lequel le coulisseau (3) est déplaçable le long de l'arbre de guidage (1).

13. Dispositif selon la revendication 12, **caractérisé en ce que** le coulisseau (3) présente un profil en U périphérique annulaire, dans lequel les aimants (12) du moteur électrique sont fixés à l'intérieur du profil en U et dans lequel par ailleurs une bobine cylindrique annulaire fixe (11) du moteur électrique pénètre dans le profil en U.

14. Dispositif selon la revendication 13, **caractérisé en ce que** les aimants (12) et la bobine cylindrique (11) forment un moteur électrique monophasé.
